Europäisches Patentamt

European Patent Office

Office européen des brevets

(11) Veröffentlichungsnummer : **0 141 285**
**B1**

(12) **EUROPÄISCHE PATENTSCHRIFT**

(45) Veröffentlichungstag der Patentschrift :
**30.12.86**

(51) Int. Cl.⁴ : **G 07 F 7/06, G 06 K 7/10**

(21) Anmeldenummer : **84111881.3**

(22) Anmeldetag : **04.10.84**

(54) **Magazin für Transportwagen, insbesondere Einkaufswagen von Supermärkten oder dergleichen.**

(30) Priorität : 08.10.83 DE 3336657

(43) Veröffentlichungstag der Anmeldung :
**15.05.85 Patentblatt 85/20**

(45) Bekanntmachung des Hinweises auf die Patenterteilung : **30.12.86 Patentblatt 86/52**

(84) Benannte Vertragsstaaten :
**AT BE CH DE FR GB IT LI NL SE**

(56) Entgegenhaltungen :
**EP-A- 0 077 690**
**DE-A- 3 130 543**
**US-A- 3 882 982**
**US-A- 4 141 078**
**US-A- 4 160 522**

(73) Patentinhaber : **Schulte-Schlagbaum Aktiengesellschaft**
**Nevigeser Strasse 100-115**
**D-5620 Velbert 15 (DE)**

(72) Erfinder : **Eisermann, Armin**
**Eichholzstrasse 14**
**D-5620 Velbert 1 (DE)**

(74) Vertreter : **Rieder, Hans-Joachim, Dr.**
**Corneliusstrasse 45 Postfach 11 06 42**
**D-5600 Wuppertal 11 (DE)**

Jouve, 18, rue St-Denis, 75001 Paris, France

## Beschreibung

Die Erfindung betrifft ein Magazin für Transportwagen, insbesondere Einkaufswagen von Supermärkten oder dergleichen, mit Entnahme- und Rückgabe-Durchfahrsperren für die Transportwagen, einer Geldkassiereinrichtung zur Freigabe der Entnahme-Durchfahrsperre und einer Geldrückgabeeinrichtung an der Rückgabe-Durchfahrsperre, ferner einem an jeden Transportwagen angebrachten Kenndatenträger und Leseeinrichtungen für diese Daten im Bereich der Entnahme- und Rückgabe-Durchfahrsperren.

Bei einer bekannten Ausgestaltung dieser Art (EP-A-77 690) weisen die Datenträger der Wagen eines Magazins alle die gleiche Kodierung auf. Das Entnehmen eines Wagens erfordert das Einwerfen einer Pfandmünze, die beim Zurückbringen des Wagens wieder ausgegeben wird. Ein solches Magazin arbeitet marktbezogen. Es ist daher nicht möglich, mittels eines Wagens eines anderen Magazins und eines anders kodierten Datenträgers an der Geldrückgabestelle beim Rückbringen dieses Wagens eine Pfandmünze zurückzuerhalten. Jedoch besteht eine Umgehungsmöglichkeit darin, den Transportwagen über die Entnahme-Durchfahrsperre zu heben und beim Rückbringen des Transportwagens an der Geldrückgabestelle eine Pfandmünze zurückzuerhalten.

Um die mißbräuchliche Entnahme von Einkaufswagen aus dem Magazin auszuschließen, ist es bekannt, am Boden eine Rückhalteschiene vorzusehen, die beim Einschieben des Transportwagens ein Eingriffsglied umfaßt, welches an einem abwärts gerichteten Ausleger der Rollenachse sitzt (DE-A-2 950 784). Es handelt sich hierbei um starke mechanische Sperren. Ferner stellen die aus dem Boden hervorragenden Rückhalteschienen Stolperkanten dar.

Der Erfindung liegt die Aufgabe zugrunde, ein Magazin der eingangs genannten Art in einfacher Weise so zu gestalten, daß nur für den entnommenen Transportwagen, für den die entsprechende Pfandgebühr entrichtet wurde, beim Zurückbringen die Pfandmünze zurückgegeben wird.

Gelöst wird diese Aufgabe dadurch, daß die den einzelnen Transportwagen zugeordneten Kenndaten alle voneinander verschieden sind, daß die Leseeinrichtung der Entnahme-Durchfahrsperre mit der Leseeinrichtung der Rückgabe-Durchfahrsperre derart gekuppelt ist, daß die Leseeinrichtung der Entnahme-Durchfahrsperre die abgelesenen Kenndaten jedes entnommenen Transportwagens an die Leseeinrichtung der Rückgabe-Durchfahrsperre weitergibt und daß letztere die Geldrückgabeeinrichtung nur bei Durchfahrt eines Transportwagens freigibt, dessen Kenndaten vorher von der Leseeinrichtung der Entnahme-Durchfahrsperre anläßlich einer Entnahme des Transportwagens erfaßt wurden.

Das erfindungsgemäße Magazin hat einen einfachen Aufbau und ist von erhöhtem Gebrauchswert. Starke mechanische Sperren zur Sicherung der Transportwagen können entfallen. Um einen Wagen zu erhalten, muß der Benutzer den erforderlichen Pfandbetrag entrichten. Beim Vorbeiführen des Wagens an der Leseeinrichtung der Entnahme-Durchfahrsperre werden die Kenndaten des Transportwagens gelesen und an die Leseeinrichtung der Rückgabe-Durchfahrsperre weitergegeben.

Die Entnahme-Durchfahrsperre öffnet, und der Benutzer kann den Transportwagen in der üblichen Weise handhaben. Nach Gebrauch des Transportwagens und beim Zurückführen desselben in das Magazin passiert der Wagen-Datenträger die Leseeinrichtung der Rückgabe Durchfahrsperre, Da diese Leseeinrichtung die Information enthält, daß beim Entnehmen des Transportwagens der entsprechende Pfandbetrag bezahlt wurde, erfolgt die Geldrückgabe. Somit ist gewährleistet, daß nur für den entnommenen Transportwagen eine Pfandmünze zurückgegeben wird, für den bei der Entnahme der entsprechende Pfandbetrag bezahlt wurde. Daher lassen sich keine Manipulationen vornehmen, die darin bestehen, einen Transportwagen über die Entnahme-Durchfahrsperre zu heben und dann beim Zurückführen desselben eine Pfandmünze zu erhalten. Das Magazin erzwingt die richtige Handhabung der Transportwagen. Es ist ferner nicht möglich, einen Wagen eines Magazins, für welchen zwar auch ein Pfandbetrag entrichtet wurde, in ein anderes Magazin zurückzubringen und dort die Pfandrückgabe zu veranlassen.

Eine vorteilhafte Weiterbildung ist darin zu sehen, daß die Leseeinrichtung der Entnahme-Durchfahrsperre erst nach Geldeinwurf in die Betriebsbereitschaftsstellung tritt. Der mit dem individuell kodierten Datenträger ausgerüstete Transportwagen vermag demnach, falls er die Leseeinrichtung passiert, die Entnahme-Durchfahrsperre noch nicht zu öffnen. Zuvor muß nämlich der Pfandbetrag bzw. die Pfandmünze an der Geldeinwurfstelle entrichtet worden sein.

Weiterhin ist es günstig, daß die Rückgabe-Durchfahrsperre allein aufgrund der Ablesung der Kenndaten eines Transportwagens, ohne daß dessen Kenndaten vorher von der Leseeinrichtung der Entnahme-Durchfahrsperre anläßlich einer Entnahme des Transportwagens erfaßt wurden, in die Offenstellung gesteuert ist. Daher kann auch ein Transportwagen, für den beim Entnehmen kein Pfandbetrag entrichtet wurde, in das Magazin zurückgebracht werden. Es erfolgt dann jedoch keine Pfandrückgabe.

Sodann besteht die Möglichkeit, daß die Geldkassiereinrichtung als eine von der Entnahme-Durchfahrsperre getrennte, mit dieser elektrisch verbundenen Eingabe-Tastatur gestaltet ist. Dann kann der Pfandbetrag auch an anderer Stelle entrichtet werden, was über die Tastatur der Leseeinrichtung der Entnahme-Durchfahrsperre mitgeteilt wird. Nach dem Vorbeiführen des Wagens an der Leseeinrichtung der Entnahme-Durchfahrsperre öffnet diese dann.

Ein ständiger Geldvorrat für die Wagenrückgabe läßt sich durch eine Münzen-Transporteinrichtung von der Geldkassiereinrichtung zur Rückgabe-Durchfahrsperre erreichen.

Darüber hinaus erweist es sich als vorteilhaft, wenn der Eingang bei der Rückgabe-Durchfahrsperre zweibahnig gestaltet ist derart, daß die erste Bahn nur für den Transportwagen und die zweite Bahn nur für den Benutzer passierbar ist. Eine Umgehung des Magazins wird hierdurch weitgehend verhindert.

Die erste Bahn kann mit einseitig wegklappbaren Hängestangen versehen sein.

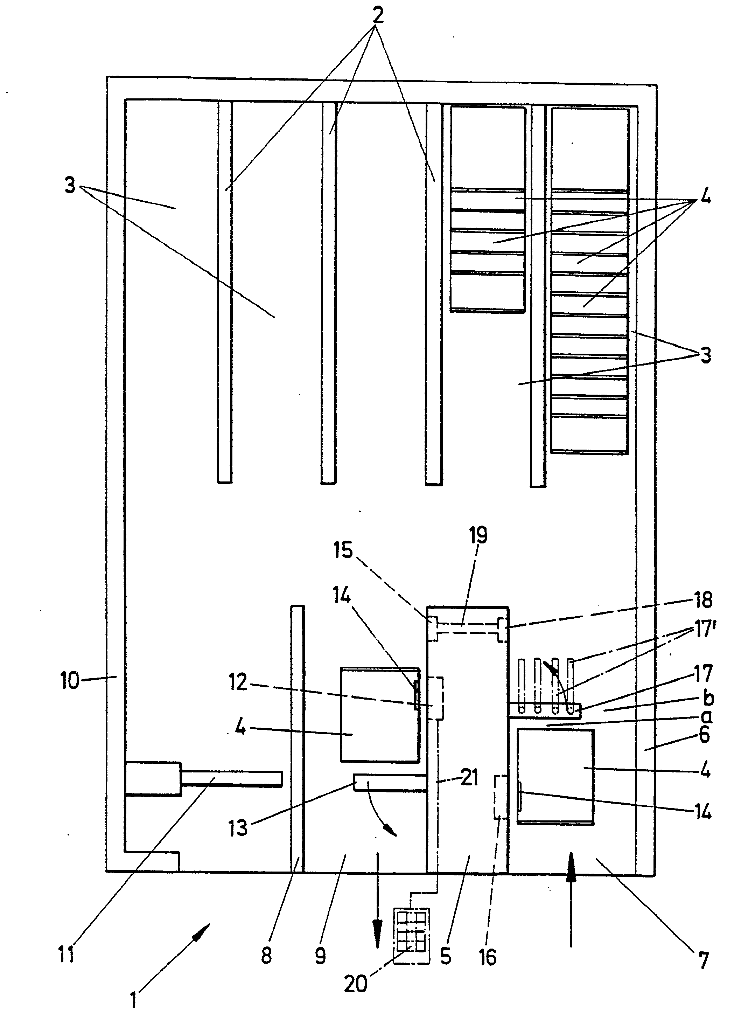

Nachstehend wird ein Ausführungsbeispiel der Erfindung anhand der Zeichnung erläutert.

In der Zeichnung ist ein Magazin 1 im Grundriß dargestellt. Die dem Zugang des Magazins abgekehrte Seite ist durch mehrere Trennwände 2 in schmale Kammern 3 unterteilt, deren Breite etwas größer ist als die Breite der darin in Reihe aufbewahrten Transportwagen 4.

Auf der Zugangsseite des Magazins 1 befindet sich eine Automaten-Säule 5. Diese bildet in Verbindung mit der rechts angeordneten Magazinwand 6 einen Eingang 7 und mit einer parallel zur Säule 5 verlaufenden Trennwand 8 einen Ausgang 9. Zwischen Trennwand 8 und der linken Magazinwand 10 erstreckt sich eine Personensperre 11, die nur durch befugtes Personal betätigbar ist.

Im Bereich des Ausgangs 9 ist in der Automaten-Säule 5 eine Leseeinrichtung 12 vorgesehen und darauffolgend eine Entnahme-Durchfahrsperre 13. Die Leseeinrichtung 12 befindet sich in der Höhe eines am Wagen 4 angebrachten Datenträgers 14. Jeder Transportwagen 4 hat seine eigenen ihm zugehörigen Kenndaten. An der Automatensäule 5 befindet sich an bequem erreichbarer Position eine Geldeinwurfstelle 15, die so placiert ist, daß bei bis vor die Entnahme-Durchfahrsperre 13 geschobenem Transportwagen 4 die erforderliche Pfandmünze eingeworfen werden kann.

Bei der Entnahme-Durchfahrsperre 13 handelt es sich um einen in Pfeilrichtung in die Freigabestellung schwenkenden Sperrfinger, der so lang ist, daß der zwischen seinem äußeren Ende und der Trennwand 8 verbleibende Raum zum Durchschieben des Transportwagens zu klein ist, jedoch den Durchgang von Personen gestattet.

Die dem Eingang 7 zugekehrte Seite der Automatensäule 5 enthält ebenfalls eine Leseeinrichtung 16, die mit der Leseeinrichtung 12 der Entnahme-Durchfahrsperre 13 gekuppelt ist. Die Leseeinrichtung 16 befindet sich gleichfalls in Höhe des Datenträgers 14 des Wagens 4. Der Leseeinrichtung 16 nachgeordnet ist eine als Sperrfinger ausgebildete Rückgabe-Durchfahrsperre 17. Der Abstand zwischen derem freien Ende und der Magazinwand 6 ist geringer als die Breite des Wagens 4. Der Abstand ist jedoch so groß, daß Personen den Eingang passieren können, um einen Transportwagen 4 zu entnehmen. Hinter der Rückgabe-Durchfahrsperre 17 befindet sich eine Geldrückgabeeinrichtung 18. Von der Geldkassiereinrichtung 15 führt eine Münzentransporteinrichtung 19 zur Rückgabe-Durchfahrsperre.

Es ergibt sich folgende Wirkungsweise : Um einen Wagen 4 dem Magazin entnehmen zu können, ist vorerst der Eingang 7 zu passieren und ein Wagen 4 aus einer Reihe herauszuziehen. Er wird dann in Richtung des Ausgangs 9 geschoben. Die erforderliche Pfandmünze ist nun an der Geldeinwurfstelle 15 zu entrichten, wodurch die Leseeinrichtung 12 in die Betriebsbereitschaftsstellung tritt. Passiert der Datenträger 14 die Leseeinrichtung 12, so verschwenkt die Entnahme-Durchfahrsperre 13 in Pfeilrichtung. Dieser Zustand tritt jedoch nicht ein, wenn nur der Wagen 4 die Leseeinrichtung 12 passiert, ohne daß eine Pfandmünze entrichtet wird. Die Leseeinrichtung 12 gibt an die Leseeinrichtung 16 die Information weiter, daß für diesen individuell kodierten Wagen 4 die Pfandmünze bezahlt wurde. Nach Durchschieben des Wagens kehrt die Entnahme-Durchfahrsperre 13 in die Sperrstellung zurück.

Nach Gebrauch des Transportwagens 4 kann dieser nun zurückgeführt werden, wobei er den Eingang 7 passiert. Der Datenträger 14 des Wagens fährt dabei an der Leseeinrichtung 16 der Rückgabe-Durchfahrsperre 17 vorbei. Diese öffnet durch Verschwenken in Pfeilrichtung, so daß der Wagen 4 durchgeschoben werden kann. Gleichzeitig gibt die Leseeinrichtung 16 die Information an die Geldrückgabestelle 18 weiter, die eine Pfandmünze zurückgibt. Nach Durchschieben des Wagens kehrt die Rückgabe-Durchfahrsperre 17 in ihre Sperrlage zurück.

Wurde ein Wagen 4 entnommen, ohne für ihn eine Pfandmünze entrichtet zu haben, so wurden dessen Kenndaten nicht der Leseeinrichtung 16 der Rückgabe-Durchfahrsperre mitgeteilt. Dann wird auch beim Zurückbringen dieses Wagens beim Passieren der Leseeinrichtung 16 und Rückgabe-Durchfahrsperre 17 kein Pfandbetrag an der Geldrückgabestelle 18 ausgegeben.

Der Automatensäule 5 sind nicht dargestellte Führungen zugeordnet, die veranlassen, daß die Wagen 4 in entsprechendem Abstand an den Leseeinrichtungen 12, 16 vorbeigeführt werden.

Die erfindungsgemäße Ausgestaltung schließt aus, daß man für mit Kenndaten versehene Wagen eines anderen Magazins an diesem Magazin eine Pfandmünzen-Rückgabe erzielt.

Bei der Rückgabe-Durchfahrsperre kann es sich auch um einen starren, horizontal ausgerichteten Balken handeln, dem abwärts gerichtete Hängestangen 17' zugeordnet sind. Letztere sind nur in einer Richtung schwenkbar, so daß beim Einschieben des Wagens 4 die Hängestangen 17' von diesem in eine Ausweichstellung verlagert werden, siehe strichpunktierte Darstellung.

Der Eingang 7 der Rückgabe-Durchfahrsperre ist somit zweibahnig gestaltet. Die eine Bahn a ist nur für den Wagen 4 und die andere, benachbarte Bahn b nur für den Benutzer passierbar.

Mittels einer getrennt von der Entnahme-Durchfahrsperren-Einrichtung angeordneten, strichpunktiert angedeuteten Eingabe-Tastatur 20, welche die Geldkassierstelle bildet, kann eine Fernbedienung erreicht werden. Der Pfandmünzbetrag wird an der Eingabe-Tastatur 20 entrichtet. Durch Tastatureingabe wird über eine elektrische Leitung 21 die Information an die Entnahme-Durchfahrsperren-Leseeinrichtung 12 weitergeleitet, daß für eine bestimmte Wagennummer die Pfandhinterlegung erfolgte. Dann tritt die Entnahme-Durchfahrsperre 13 nach Vorbeifahren des Wagens an der Leseeinrichtung 12 in die Öffnungsstellung.

Es besteht hierbei die Möglichkeit, das Entrichten des Pfandbetrages entweder an der Eingabe-Tastatur 20 oder auch, wie eingangs beschrieben wurde, an der Geldeinwurfstelle 15 vorzunehmen.

## Patentansprüche

1. Magazin für Transportwagen (4), insbesondere Einkaufswagen von Supermärkten oder dergleichen, mit Entnahme- und Rückgabe-Durchfahrsperren (13, 17) für die Transportwagen (4), einer Geldkassiereinrichtung zur Freigabe der Entnahme-Durchfahrsperre (13) und einer Geldrückgabeeinrichtung an der Rückgabe-Durchfahrsperre (17), ferner einem an jedem Transportwagen (4) angebrachten Kenndatenträger (14) und Leseeinrichtungen (12, 16) für diese Daten im Bereich der Entnahme- und Rückgabe-Durchfahrsperren, dadurch gekennzeichnet, daß die den einzelnen Transportwagen (4) zugeordneten Kenndaten alle voneinander verschieden sind, daß die Leseeinrichtung (12) der Entnahme-Durchfahrsperre (13) mit der Leseeinrichtung (16) der Rückgabe-Durchfahrsperre (17) derart gekuppelt ist, daß die Leseeinrichtung (12) der Entnahme-Durchfahrsperre (13) die abgelesenen Kenndaten jedes entnommenen Transportwagens (4) an die Leseeinrichtung (16) der Rückgabe-Durchfahrsperre (17) weitergibt und daß letztere die Geldrückgabeeinrichtung nur bei Durchfahrt eines Transportwagens (4) freigibt, dessen Kenndaten vorher von der Leseeinrichtung (12) der Entnahme-Durchfahrsperre (13) anläßlich einer Entnahme des Transportwagens (4) erfaßt wurden.

2. Magazin nach Anspruch 1, dadurch gekennzeichnet, daß die Leseeinrichtung (12) der Entnahme-Durchfahrsperre (13) erst nach Geldeinwurf in die Betriebsbereitschaftsstellung tritt.

3. Magazin nach Anspruch 1, dadurch gekennzeichnet, daß die Rückgabe-Durchfahrsperre (17) allein aufgrund der Ablesung der Kenndaten eines Transportwagens (4), ohne daß dessen Kenndaten vorher von der Leseeinrichtung (12) der Entnahme-Durchfahrsperre (13) anläßlich einer Entnahme eines Transportwagens (4) erfaßt wurden, in die Offenstellung gesteuert ist.

4. Magazin nach Anspruch 1, dadurch gekennzeichnet, daß die Geldkassiereinrichtung (15) als eine von der Entnahme-Durchfahrsperre (13) getrennte, mit dieser elektrisch verbundene Eingabe-Tastatur (20) gestaltet ist.

5. Magazin nach Anspruch 1, gekennzeichnet durch eine Münzen-Transporteinrichtung (19) von der Geldkassiereinrichtung (15) zur Rückgabe-Durchfahrsperre (17).

6. Magazin nach Anspruch 1, dadurch gekennzeichnet, daß der Eingang (7) bei der Rückgabe-Durchfahrsperre (17) zweibahnig gestaltet ist derart, daß die erste Bahn (a) nur für den Transportwagen (4) und die zweite Bahn (b) nur für den Benutzer passierbar ist.

7. Magazin nach Anspruch 6, dadurch gekennzeichnet, daß die erste Bahn (a) mit einseitig wegklappbaren Hängestangen (17') versehen ist.

## Claims

1. Magazine for transport trolleys (4), especially shopping trolleys of supermarkets or the like, comprising collection and return barriers (13, 17) for the transport trolleys (4), a coin collector device for releasing the collection barrier (13) and a coin return device at the return barrier (17), and furthermore a characteristic data carrier (14), mounted on each transport trolley (4), and reading devices (12, 16) for these data in the region of the collection and return barriers, characterized in that the characteristic data associated with the individual transport trolleys (4) are all different from one another, that the reading device (12) of the collection barrier (13) is coupled with the reading device (16) of the return barrier (17) in such a manner that the reading device (12) of the collection barrier (13) transmits the read-off characteristic data of each transport trolley (4) collected to the reading device (16) of the return barrier (17) and that the latter releases the coin return device only when a transport trolley (4) passes through, of which the characteristic data have previously been detected by the reading device (12) of the collection barrier (13) on the occasion of a collection of the transport trolley (4).

2. Magazine according to Claim 1, characterized in that the reading device (12) of the collection barrier (13) does not come into operational readiness until after coin insertion.

3. Magazine according to Claim 1, characterized in that the return barrier (17) is controlled into the open position solely on account of the reading of the characteristic data of a transport trolley (4), without its characteristic data having previously been detected by the reading device (12) of the collection barrier (13) on the occasion of a collection of a transport trolley (4).

4. Magazine according to Claim 1, characterized in that the coin collector device (15) is constructed as an input keyboard (20), separate from the collection barrier (13) but electrically connected with it.

5. Magazine according to Claim 1, characterized by a coin transport device (19) from the coin collector device (15) to the return barrier (17).

6. Magazine according to Claim 1, characterized in that the entrance (7) at the return barrier (17) is two-track, such that the first track (a) can be passed only by the transport trolley (4) and the second track (b) only by the user.

7. Magazine according to Claim 6, characterized in that the first track (a) is equipped with suspended rods (17') which can be pivoted away at one end.

**Revendications**

1. Parc pour chariots transporteurs (4), notamment pour chariots d'achat tels qu'utilisés dans les supermarchés, ou analogues, comportant des guichets de retrait et de retour (13, 17) pour lesdits chariots (4), un dispositif d'encaissement pour libérer le guichet de retrait (13) et un dispositif de remboursement situé au guichet de retour (17), ainsi qu'un support (14) de données d'identification monté sur chacun desdits chariots (4) et des dispositifs de lecture (12, 16) desdites données, situés dans la zone des guichets de retrait et de retour, caractérisé en ce que les données d'identification affectées aux différents chariots transporteurs (4) sont toutes différentes les unes des autres, en ce que le dispositif de lecture (12) du guichet de retrait (13) est couplé au dispositif de lecture (16) du guichet de retour (17) de façon telle que le dispositif de lecture (12) de retrait transmette au dispositif de lecture (17) de retour les données d'identification relevées pour chaque chariot transporteur (4) retiré, et en ce que ledit guichet de retour n'actionne le dispositif de remboursement que lors du passage d'un chariot (4) dont les données d'identification avaient été enregistrées auparavant par le dispositif de lecture (12) du guichet de retrait (13) lors du retrait du chariot (4) intéressé.

2. Parc selon la revendication 1, caractérisé en ce que le dispositif de lecture (12) du guichet de retrait (13) ne prend sa position de disponibilité qu'après que le montant de consigne ait été payé.

3. Parc selon la revendication 1, caractérisé en ce que le guichet de retour (17) est amené dans sa position d'ouverture uniquement sur la base de la lecture des données d'identification d'un chariot (4), sans que lesdites données de ce chariot ne soient relevées préalablement par le dispositif de lecture (12) du guichet de retrait (13) lors du retrait d'un chariot (4).

4. Parc selon la revendication 1, caractérisé en ce que le dispositif d'encaissement (15) est constitué par un clavier (20) récepteur séparé dudit guichet de retrait (13) et relié électriquement à celui-ci.

5. Parc selon la revendication 1, caractérisé par un dispositif transporteur de monnaie (19) entre le dispositif encaisseur (15) et le guichet de retour (17).

6. Parc selon la revendication 1, caractérisé en ce que l'entrée (7) dudit guichet de retour (17) comporte deux voies, de façon telle que la première voie (a) ne peut être empruntée que par le chariot transporteur (4), tandis que la deuxième voie (b) ne peut être empruntée que par l'usager.

7. Parc selon la revendication 6, caractérisé en ce que ladite première voie (a) est équipée de tiges suspendues (17') pouvant être effacées par pivotement dans une seule direction.